# EUROPÄISCHE PATENTSCHRIFT

(11) **EP 1 857 254 B1**
(45) Veröffentlichungstag und Bekanntmachung des Hinweises auf die Patenterteilung: **24.06.2009**
(21) Anmeldenummer: 07009363.8
(22) Anmeldetag: 10.05.2007
(51) Int. Cl.: B29C 47/00, B60J 10/00, F25D 23/08, E05C 19/16

(54) **Dichtungsprofil mit Magnet und Herstellungsverfahren**
Sealing profile with magnet and method for manufacturing it
Joint d'étanchéité profilé avec aimant et procédé de fabrication

(30) Priorität: 19.05.2006 DE 202006008136 U
(43) Veröffentlichungstag der Anmeldung: 21.11.2007
(73) Patentinhaber: REHAU AG + Co, 95111 Rehau (DE)
(72) Erfinder: Engelhardt, Dieter, 95179 Geroldsgrün (DE); Wendler, Matthias, 95186 Trogen (DE); Hermann, Andreas, 95111 Rehau (DE)

(56) Entgegenhaltungen:
- EP-A2- 0 369 799
- WO-A-03/064196
- WO-A-20/04023052
- CH-A- 379 752
- GB-A- 1 554 941
- US-A- 5 487 239

## Beschreibung

Die Erfindung betrifft Dichtungsprofile aus Polyvinylchlorid (PVC), bestehend aus einem harten, glasklaren Befestigungsteil und einem weichen Dichtungsteil, das einen polymergebundenen magnetischen Streifen enthält, sowie ein Herstellungsverfahren für solche Dichtungsprofile.

Derartige Dichtungsprofile sind wohlbekannt und haben sich inzwischen in mannigfaltigen Anwendungen durchgesetzt.

Ein Beispiel hierfür ist ein sog. Duschprofil, welches an der Duschkabinentüre befestigt ist und sowohl die Abdichtung der Duschkabine gegen Wasseraustritt in den Raum außerhalb der Duschkabine bewirkt, aber auch die geschlossene Duschkabinentüre mit Magnetkraft, die zwischen der magnetischen Komponente der Duschprofils und der metallischen Duschkabine wirkt, geschlossen hält.

Weitere Beispiele für die Anwendung von Dichtungsprofilen sind Glastüren in Küchen-, Büro- oder Wohnzimmermöbeln.

Aus der DE 102 41 001 bzw. WO 03/064196 ist in diesem Zusammenhang ein Dichtungsprofil bekannt, das ein Magnetprofil aufweist.
Die Druckschrift DE 102 40 993 offenbart ein Dichtungsprofil, das aus chemisch miteinander verträglichen Polymerzusammensetzungen besteht und das beim Verschweißen einen Stoffschluss insbesondere auch des Magnetprofils ermöglicht.
Die DE 31 29 810 lehrt einen Aufbau einer Türdichtung, die einen magnetischen Streifen enthält, dessen Oberfläche sich in Reibungsberührung an das Dichtungs-Segment anschmiegt.
Die DE 203 13 022 gibt ein Dichtprofil zur Kenntnis, das Befestigungsschenkel aufweist, an denen Wülste vorgesehen sind, die weicher sind, als das Material der Schenkel.

Aus der DE 203 12 573 ist ein Dichtprofil bekannt, das einen Haftprofilteil aufweist, der zumindest abschnittsweise aus einem Material einer bestimmten Härte hergestellt ist, das einen bestimmten Weichmacheranteil aufweist.
Eine magnetische Dichtung geht aus der DE 692 16 428 hervor, die sich dadurch auszeichnet, dass die magnetische Stange längs mindestens einer der beiden kürzeren gegenüberliegenden Seiten ihres Querschnittes magnetisiert ist und diese Seite die Abdichtung bewirkt.
Schließlich lehrt die DE 692 04 757, ein Dichtungsprofil bereitzustellen, das eine rohrförmige Kammer aufweist, die zur Abdichtung krummliniger Ausdehnungen geeignet ist, indem die Kammer begrenzende frei Wände vorgesehen sind, die in die gleiche Richtung gekrümmt sind.

Nachteilig an diesem Stand der Technik ist, dass das aus Hart-PVC bestehende Befestigungsteil nicht glasklar, sondern nur transluzent bzw. milchig ist, so dass es Ansprüche an einen hochwertigen optischen Eindruck nicht erfüllt.
Der Lichtdurchtritt durch das Befestigungsteil ist behindert.

Aufgabe der vorliegenden Erfindung ist es daher, diesen Nachteil zu überwinden und ein Dichtungsprofil bereitzustellen, das aus einem möglichst glasklaren Befestigungsteil mit hoher Transparenz und einem elastisch verformbaren Dichtungsteil besteht, welches in einer angeformten Tasche ein Magnetprofil enthält, sowie ein Herstellverfahren dafür anzugeben.

Erfindungsgemäß wird die Aufgabe zur Bereitstellung des Dichtungsprofils durch die Merkmale des Anspruchs 1 gelöst.
Die Lösung der Aufgabe zur Herstellung des Profils erfolgt durch die Merkmale des Anspruchs 5.

Bevorzugte Ausführungsformen und Weiterbildungen finden sich in den Unteransprüchen.

Die Erfindung soll nachfolgend näher erläutert werden.

Die Hartkomponente, also das Befestigungsteil, besteht im Wesentlichen aus 65 bis 90 Gew.-% Hart-PVC (K-Wert zwischen 57 und 60), Acrylat-Schlagzähmodifikator je nach gewünschtem Elastizitätsmodul der Hartkomponente, sowie Zinn- und UV-Stabilisatoren.

Die Weichkomponente, also das elastisch verformbare Dichtungsteil, besteht im Wesentlichen aus 55 bis 70 Gew.-% füllstofffreiem PVC (K-Wert 65 bis 75), 35 bis 45 Gew.-% einer weichmachende Komponente auf Basis eines Polymer-Weichmachers und / oder epoxidiertem Sojaöl (je nach gewünschter Flexibilität des Dichtungsteils), sowie Ca-/Zn- und UV-Stabilisatoren.

Das Magnetband besteht aus einem mit Ferrit hochgefülltem Polymer.

In einer Extrusionsstrecke mit den entsprechenden Zuspritzextrudern werden die drei Komponenten in Coextrusionswerkzeugen zusammengeführt und verbunden, wobei die Hart-komponente, je nach gewünschter Wandstärke, zwischen 30 und 150 %, über den Abzug der Extrusionsstrecke verstreckt wird.
Beim Verstrecken wird eine annähernd glasklare Hartkomponente erhalten, die eine hohe Transparenz aufweist.
Besonders bevorzugt wird die Hartkomponente zu 80 bis 125 % verstreckt.

Die Schmelzetemperatur beträgt beim Verstrecken 150 bis 200 °C.

Insbesondere kann die PVC-Komponente derart verstreckt werden, dass das Profil eine Transmission von 90 % bei Wellenlängen von 200 bis 900 nm aufweist.

### Ausführungsbeispiel

Nachfolgend soll anhand eines Ausführungsbeispiels für den Fall Duschprofil die Erfindung im Detail beschrieben werden.

Die Wandstärken des fertigen Profils betragen im Bereich des harten Befestigungsteils 1,0 mm, im Bereich des elastisch verformbaren Dichtungsteils 0,85 mm und im Bereich des Magnetprofils 1,1 mm.

Rezeptur

Die Hart-PVC-Komponente ist zusammengesetzt im Wesentlichen aus 80 Gew.-% Hart-PVC (K-Wert 58), 10 Gew.-% Acrylat-Schlagzähmodifikator, 2,5 Gew.-% Sn-Stabilisator und 0,5 Gew.-% UV-Stabilisator.

Die Weich-PVC-Komponente ist zusammengesetzt im Wesentlichen aus 60 Gew.-% PVC (K-Wert 70), 38 Gew.-% Polymer-Weichmacher und epoxidiertes Sojaöl, sowie 2 Gew.-% einer üblichen Mischung aus Ca-/Zn- Stabilisator und Fungizid.

Die magnetische Komponente ist zusammengesetzt aus ca. 90 Gew.-% Barium-Ferrit (Alpha-Typ), die restlichen ca. 10 Gew.-% bestehen aus einer für Magnetprofile üblichen Mischung aus verschiedenen Kautschuken, wie beispielsweise Synthesekautschuken, wie EPDM, und Wachsen, wie PE-Wachsen.

### Verfahren

Auf einer Extrusionsstrecke mit Extrudern, Extrusionsabzug, Kalibrierung und Wasserbad werden die drei genannten Rezepturkomponenten je auf einem Extruder bereitgestellt und mittels Coextrusionswerkzeugen zusammengeführt und verbunden, wobei die Hartkomponente bei einer Schmelzetemperatur von 175 °C über den Extrusionsabzug zu 95 % verstreckt wird.

### Prüfung der erfindungsgemäßen Dichtungsprofile

### a) Transparenz, Messung des Transmissionsgrades

Mit einem Spektrometer wurde die Transmission eines erfindungsgemäßen verstreckten und eines unverstreckten Dichtungsprofils bei Wellenlängen zwischen 200 bis 900 nm ermittelt.
Das verstreckte, erfindungsgemäße Profil zeigte ein Transmission von 90 %, war also nahezu glasklar, während das unverstreckte eine Transmission von 82 bis 84 %, also eine transluzente Optik, zeigte.

### b) Beständigkeit gegen Putzmittel (Zeitraffertest)

Um die Beständigkeit der Transparenz - und damit der Verstreckung - gegen die im Haushalt üblichen Putzmittel zu überprüfen, wurden einige erfindungsgemäßen Dichtungsprofile über 90 Tage täglich einem Spülzyklus von 1 Stunde bei 55 °C in einem Geschirrspüler unterzogen.
Hierbei wurde eine Mischung aus Somat-Spülmittel mit Wasser im Verhältnis 1 zu 150.
Die Messung während dieser Lagerung ergab, dass der Wert der Transmission jeweils lediglich um 2 %, also auf 88 % abnahm.
Dieser Rückgang des Transmissionsgrades ist jedoch reversibel: wenn im Normklimaraum die mit Somat-Spülmittel behandelten Profile konditioniert werden, steigt der Transmissionsgrad wieder auf 90 %.
Bisher waren - neben dem unveränderten optischen Eindruck des Dichtungsprofils - auch keine Einbußen in der Haftung Hart-Komponente - Weich-Komponente - Magnetstreifen feststellbar.

### c) Rückschrumpf

Unterzieht man die erfindungsgemäßen Profile einer Lagerung bei 150°C über 60 Minuten, wird beim erfindungsgemäßen Dichtungsprofil ein Schrumpf von 20 % festgestellt, während ein nichtverstrecktes Profil einen Schrumpf von 5 % aufweist.

### d) Verhalten im polarisierten Licht

Die verstreckte annähernd glasklare Hartkomponente zeigt im polarisierten Licht eine ausgeprägte Anisotropie der Lichtdurchlässigkeit in Abhängigkeit zur Verstreckungsrichtung. Im Aufbau vergleichbare Profile, die nicht verstreckt sind, zeigen diese Anisotropie nicht.

### Anwendung

Die erfindungsgemäßen Dichtungsprofile lassen sich ganz bevorzugt an Gegenständen, die eine Plattenhalbzeug aus transparentem Silicat- oder Polymerglas enthalten, als Dichtungen gegen Staub und Spritzwasser einsetzen.

Anwendungen sind bei Türen, Klappen und Abdeckungen in Bad-, Küchen- oder Büromöbein gegeben.

## Patentansprüche

1. Dichtungsprofil aus Polyvinylchlorid (PVC), bestehend aus einem Befestigungsteil und einem weichen Dichtungsteil, das einen polymergebundenen magnetischen Streifen enthält, wobei die Hart-PVC-Komponente des Befestigungsteils, die Weich-PVC-Komponente des weichen Dichtungsteils und der magnetische Streifen mittels eines Coextrusionswerkzeuges zusammengeführt und verbunden sind, **dadurch gekennzeichnet, dass** die Hartkomponente über den Extrusionsabzug zu 30 bis 150 % verstreckt ist, so dass die Hartkomponente annähernd glasklar ist und eine hohe Transparenz aufweist.

2. Dichtungsprofil nach Anspruch 1, **dadurch gekennzeichnet, dass** die Hart-PVC-Komponente im Wesentlichen zusammengesetzt ist aus 65 bis 90 Gew.-% Hart-PVC (K-Wert 58), 5 bis 20 Gew.-% Acrylat-Schlagzähmodifikator, 2 bis 3,5 Gew.-% Sn-Stabilisator und 0,5 Gew.-% UV-Stabilisator.

3. Dichtungsprofil nach Anspruch 1, **dadurch gekennzeichnet, dass** die Weich-PVC-Komponente im Wesentlichen zusammengesetzt ist aus 55 bis 70 Gew.-% PVC (K-Wert 70), 35 bis 45 Gew.-% Polymer-Weichmacher und epoxidiertes Sojaöl, sowie 1,5 bis 2,5 Gew.-% einer Mischung aus Ca-/Zn-Stabilisator und Fungizid.

4. Dichtungsprofil nach Anspruch 1, **dadurch gekennzeichnet, dass** der polymergebundene magnetische Streifen zusammengesetzt ist aus 85 bis 90 Gew.-% Ferrit und 10 bis 15 Gew.-% einer Polymerkomponente, bestehend aus einer Mischung aus synthetischen Kautschuken, wie EPDM, und Wachsen, wie PE-Wachsen.

5. Verfahren zur Herstellung eines Dichtungsprofils aus Polyvinylchlorid (PVC), bestehend aus einem Befestigungsteil und einem weichen Dichtungsteil, das einen polymergebundenen magnetischen Streifen enthält, wobei die Hart-PVC-Komponente des Befestigungsteils, die Weich-PVC-Komponente des weichen Dichtungsteils und der magnetische Streifen mittels eines Coextrusionswerkzeuges zusammengeführt und verbunden werden, **dadurch gekennzeichnet, dass** die Hartkomponente über den Extrusionsabzug zu 30 bis 150 % verstreckt wird, so dass beim Verstrecken eine annähernd glasklare Hartkomponente erhalten wird, die eine hohe Transparenz aufweist.

6. Verfahren nach Anspruch 5, **dadurch gekennzeichnet, dass** die Hart-PVC-Komponente zu 80 bis 125 % verstreckt wird.

7. Verfahren nach einem der Ansprüche 5 oder 6, **dadurch gekennzeichnet, dass** die Hart-PVC-Komponente bei einer Schmelzetemperatur von 150 bis 200 °C verstreckt wird.

8. Verfahren nach einem der Ansprüche 5 bis 7, **dadurch gekennzeichnet, dass** die Hart-PVC-Komponente derart verstreckt wird, dass das Profil eine Transmission von 90 % bei Wellenlängen von 200 bis 900 nm aufweist.

## Claims

1. Gasket profile composed of polyvinyl chloride (PVC), composed of a fastening portion and of a flexible gasket portion, which comprises a polymer-bound magnetic strip, where the rigid PVC component of the fastening portion, the flexible PVC component of the flexible gasket portion, and the magnetic strip have been combined and bonded by means of a co-extrusion die, **characterized in that** the rigid component has been oriented to an extent of from 30 to 150% via the extrusion take-off, so that the rigid component is approximately glass-clear and has high transparency.

2. Gasket profile according to Claim 1, **characterized in that** the rigid PVC component consists essentially of from 65 to 90% by weight of rigid PVC (K value 58), from 5 to 20% by weight of acrylate impact modifier, from 2 to 3.5% by weight of Sn stabilizer, and 0.5% by weight of UV stabilizer.

3. Gasket profile according to Claim 1, **characterized in that** the flexible PVC component consists essentially of from 55 to 70% by weight of PVC (K value 70), from 35 to 45% by weight of polymeric plasticizer and epoxidized soya oil, and also from 1.5 to 2.5% by weight of a mixture composed of Ca/Zn stabilizer and fungicide.

4. Gasket profile according to Claim 1, **characterized in that** the polymer-bound magnetic strip is composed of from 85 to 90% by weight of ferrite and from 10 to 15% by weight of a polymer component, composed of a mixture of synthetic rubbers, such as EPDM, and of waxes, such as PE waxes.

5. Process for the production of a gasket profile composed of polyvinyl chloride (PVC), composed of a fastening portion and of a flexible gasket portion, which comprises a polymer-bound magnetic strip, where the rigid PVC component of the fastening portion, the flexible PVC component of the flexible gasket portion, and the magnetic strip have been combined and bonded by means of a co-extrusion die, **characterized in that** the rigid component is oriented to an extent of from 30 to 150% via the extrusion take-off, so that a rigid component which is approximately glass-clear and has high transparency is obtained during the orientation.

6. Process according to Claim 5, **characterized in that** the rigid PVC component is oriented to an extent of from 80 to 125%.

7. Process according to Claim 5 or 6, **characterized in that** the rigid PVC component is oriented at a melt temperature of 150 to 200°C.

8. Process according to any of Claims 5 to 7, **characterized in that** the rigid PVC component is oriented in such a way as to give the profile a transmittance of 90% at wavelengths of from 200 to 900 nm.

## Revendications

1. Joint d'étanchéité profilé à base de poly(chlorure de vinyle) (PVC), consistant en un élément de consolidation et en un élément souple d'étanchéité qui contient une bande magnétique liée à un polymère, le composant en PVC rigide de l'élément de consolidation, le composant en PVC souple de l'élément souple d'étanchéité et la bande magnétique étant réunis et assemblés au moyen d'un outil de coextrusion, **caractérisé en ce que** le composant rigide est étiré de 30 à 150 % par le tirage d'extrusion, de sorte que le composant rigide est à peu près translucide et a une haute transparence.

2. Joint d'étanchéité profilé selon la revendication 1, **caractérisé en ce que** le composant en PVC rigide est essentiellement composé de 65 à 90 % en poids de PVC rigide (indice K 58), de 5 à 20 % en poids de modificateur antichoc acrylate, de 2 à 3,5 % en poids de stabilisant Sn et de 0,5 % en poids de stabilisant UV.

3. Joint d'étanchéité profilé selon la revendication 1, **caractérisé en ce que** le composant PVC souple est essentiellement composé de 55 à 70 % en poids de PVC (indice K 70), de 35 à 45 % en poids de plastifiant pour polymère et d'huile de soja époxydée, ainsi que de 1,5 à 2,5 % en poids d'un mélange de stabilisant Ca/Zn et de fongicide.

4. Joint d'étanchéité profilé selon la revendication 1, **caractérisé en ce que** la bande magnétique liée à un polymère est composée de 85 à 90 % en poids de ferrite et de 10 à 15 % en poids d'un composant polymère constitué d'un mélange de caoutchoucs synthétiques, tels que EPDM, et de cires, telles que des cires de PE.

5. Procédé pour la fabrication d'un joint d'étanchéité profilé à base de poly(chlorure de vinyle) (PVC), consistant en un élément de consolidation et en un élément souple d'étanchéité qui contient une bande magnétique liée à un polymère, le composant en PVC rigide de l'élément de consolidation, le composant en PVC souple de l'élément souple d'étanchéité et la bande magnétique étant réunis et assemblés au moyen d'un outil de coextrusion, **caractérisé en ce que** le composant rigide est étiré de 30 à 150 % par le tirage d'extrusion, de sorte que lors de l'étirage on obtient un composant rigide à peu près translucide qui a une haute transparence.

6. Procédé selon la revendication 5, **caractérisé en ce que** le composant en PVC rigide est étiré à 80-125 %.

7. Procédé selon la revendication 5 ou 6, **caractérisé en ce que** le composant en PVC rigide est étiré à une température de fusion de 150 à 200 °C.

8. Procédé selon l'une quelconque des revendications 5 à 7, **caractérisé en ce que** composant en PVC rigide est étiré de manière que le joint profilé présente une transmission de 90 % à des longueurs d'onde de 200 à 900 nm.
